# EUROPÄISCHE PATENTSCHRIFT

(11) **EP 2 610 178 B1**
(45) Veröffentlichungstag und Bekanntmachung des Hinweises auf die Patenterteilung: **31.10.2018**
(21) Anmeldenummer: 12198140.1
(22) Anmeldetag: 19.12.2012
(51) Int. Cl.: B64D 11/06, B60N 2/23, B60N 2/42

(54) **Sitzvorrichtung**
Seating device
Dispositif destiné à s'y asseoir

(30) Priorität: 27.12.2011 DE 102011122186
(43) Veröffentlichungstag der Anmeldung: 03.07.2013
(73) Patentinhaber: Recaro Aircraft Seating GmbH & Co. KG, 74523 Schwäbisch Hall (DE)
(72) Erfinder: Schreyer, Tim, 74523 Schwäbisch Hall (DE); Schweizer, Oliver, 88161 Lindenberg (DE); Minzer, Heiko, 74523 Schwäbisch Hall (DE)
(74) Vertreter: Daub, Thomas

(56) Entgegenhaltungen:
- EP-A1- 1 065 096
- DE-A1- 10 152 400
- GB-A- 2 409 255

## Beschreibung

### Stand der Technik

Die Erfindung geht aus von einer Sitzvorrichtung nach dem Oberbegriff des Anspruchs 1.

Es ist bereits eine Flugzeugsitzvorrichtung mit einer Rückenlehnenaufschlagssicherungseinheit bekannt, die dazu vorgesehen ist, Aufschlagkräfte auf eine Rückenlehne in einem Crashfall zu reduzieren. Die Rückenlehnenaufschlagssicherungseinheit weist hierfür einen Scherpin auf, der bei einem Aufschlagen eines Gegenstands, insbesondere eines Kopfs eines Passagiers, auf eine Rückseite der Rückenlehne abgeschert wird und eine Verriegelung der Rückenlehne aufhebt.

Aus der Druckschrift DE 101 52 400 A1 ist bereits eine Flugzeugsitzvorrichtung, mit einer Rückenlehnenaufschlagssicherungseinheit bekannt, die dazu vorgesehen ist, Aufschlagkräfte auf eine Rückenlehne in einem Crashfall zumindest teilweise zu reduzieren, wobei die Rückenlehnenaufschlagssicherungseinheit eine Stelleinheit aufweist, die zumindest dazu vorgesehen ist, einen Sicherungsvorgang einzuleiten, wobei die Stelleinheit zumindest eine zumindest weitgehend rückenlehnenkraftunabhängige Crashsensoreinheit und eine Aktoreinheit, die dazu vorgesehen ist, einen Stellvorgang einzuleiten, aufweist.

### Vorteile der Erfindung

Die Erfindung geht aus von einer Sitzvorrichtung, insbesondere einer Flugzeugsitzvorrichtung, mit einer Rückenlehnenaufschlagssicherungseinheit, die dazu vorgesehen ist, Aufschlagkräfte auf eine Rückenlehne in einem Crashfall zumindest teilweise zu reduzieren, wobei die Rückenlehnenaufschlagssicherungseinheit eine Stelleinheit aufweist, die zumindest dazu vorgesehen ist, einen Sicherungsvorgang einzuleiten, wobei die Stelleinheit zumindest eine zumindest weitgehend rückenlehnenkraftunabhängige Crashsensoreinheit und eine Aktoreinheit, die dazu vorgesehen ist, einen Stellvorgang einzuleiten, aufweist.

Es wird erfindungsgemäß vorgeschlagen, dass die Aktoreinheit und die Crashsensoreinheit zumindest teilweise einstückig ausgebildet sind. Unter einer "Stelleinheit" soll dabei insbesondere eine Einheit verstanden werden, die an einem Stellvorgang zumindest beteiligt ist, abweichend von einem reinen Scherbolzen ausgebildet ist und/oder insbesondere eine Elektronikeinheit, eine Sensoreinheit und/oder eine Aktoreinheit aufweist. Unter "vorgesehen" soll hierbei insbesondere speziell ausgebildet, ausgestattet und/oder programmiert verstanden werden. Unter einem "Sicherungsvorgang" soll dabei insbesondere ein Vorgang verstanden werden, der dazu vorgesehen ist, eine Aufprallkraft zu reduzieren und/oder zu dämpfen. Durch eine entsprechende Ausgestaltung kann eine Sitzvorrichtung besonders vorteilhaft für verschiedene Lastfälle und/oder für unterschiedliche Anforderungen ausgelegt werden.

Dadurch, dass die Stelleinheit zumindest eine zumindest weitgehend rückenlehnenkraftunabhängige Crashsensoreinheit aufweist, können verschiedene Lastaufnahmen besonders vorteilhaft differenziert werden. Unter "rückenlehnenkraftunabhängig" soll dabei insbesondere verstanden werden, dass die Sensoreinheit dazu vorgesehen ist, unabhängig von einer an der Rückenlehne angreifenden Kraft, wie insbesondere unabhängig von einer an der Rückenlehne angreifenden Haltekraft eines Passagiers, einen Crashfall zu sensieren, und zwar insbesondere, indem die Sensoreinheit dazu vorgesehen ist, eine auf ein von der Rückenlehne differierendes Bauteil wirkende Kraft und/oder besonders vorteilhaft eine Beschleunigungskraft zu sensieren. Alternativ oder zusätzlich könnte die Stelleinheit auch dazu vorgesehen sein, ein Sensorsignal von einer dritten Einheit, die einen Crashsensor aufweist, zu verarbeiten.

Die Crashsensoreinheit kann dabei verschiedene, dem Fachmann als sinnvoll erscheinende Sensoren aufweisen, wie beispielsweise Kraftsensoren, Drucksensoren usw. Besonders vorteilhaft weist die Crashsensoreinheit jedoch zumindest einen Beschleunigungssensor auf, wodurch besonders vorteilhaft eine Beschleunigung sensiert werden kann, mittels der vorzugsweise eindeutig auf einen Crashfall geschlossen werden kann. Zudem kann ein unerwünschtes Auslösen bei zumindest weitgehend statischen Kräften vorzugsweise vermieden werden. Besonders vorteilhaft ist die Crashsensoreinheit dazu vorgesehen, eine auf ein von der Rückenlehne differierendes Bauteil wirkende Beschleunigungskraft zu sensieren. Besonders vorteilhaft ist die Crashsensoreinheit dazu ausgelegt, erst ein Signal oberhalb eines Beschleunigungsschwellwerts und/oder einen Stellvorgang auszulösen, wie vorzugsweise oberhalb eines Beschleunigungswerts, der zu einer Vervierfachung einer Gewichtskraft und insbesondere zu einer Verachtfachung einer Gewichtskraft führt.

Dadurch, dass die Stelleinheit eine Aktoreinheit aufweist, die dazu vorgesehen ist, einen Stellvorgang einzuleiten, kann die Stelleinheit besonders flexibel gestaltet werden. Unter einer "Aktoreinheit" soll dabei eine Einheit verstanden werden, die dazu vorgesehen ist, eine Stellbewegung zu erzeugen, wie insbesondere eine Stellbewegung zum Öffnen eines Ventils und/oder zur Bewegung eines Elements, wie insbesondere eines Verriegelungselements.

Dadurch dass die Aktoreinheit und die Crashsensoreinheit zumindest teilweise einstückig ausgebildet sind, können zusätzliche Bauteile, Bauraum und Gewicht eingespart werden. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren, und vorteilhaft aus einem einzelnen Rohling. Unter "zumindest teilweise einstückig" soll dabei insbesondere verstanden werden, dass zumindest ein Bauteil der Aktoreinheit und ein Bauteil der Crashsensoreinheit einstückig ausgebildet sind.

Die Erfindung betrifft ferner einen Sitz gemäß Anspruch 8 sowie ein Verfahren gemäß Anspruch 9 zur zumindest teilweisen Reduzierung der Aufschlagkräfte auf eine Rückenlehne mit einer solchen Sitzvorrichtung.

Zur Reduzierung von Aufschlagkräften auf eine Rückenlehne sind verschiedene, dem Fachmann als sinnvoll erscheinende Vorgänge denkbar, beispielsweise kann eine Rückseite einer Rückenlehne und insbesondere ein Aufschlagbereich in ihrer bzw. in seiner Steifigkeit verändert werden, beispielsweise, indem in einem vorgesehenen Druckpolster Druck abgelassen wird, ein Materialwert verändert wird, ein Dämpfungselement in einen Aufschlagbereich verschoben wird und/oder indem ein steifes Element aus einem Aufschlagbereich entfernt wird. Besonders konstruktiv einfach kann dies jedoch erreicht werden, indem die Rückenlehnenaufschlagssicherungseinheit zumindest eine Auslöseeinheit aufweist, die dazu vorgesehen ist, eine Rückenlehnenverriegelung zumindest teilweise aufzuheben. Die Rückenlehnenverriegelungseinheit dient insbesondere dazu, die Rückenlehne in einer bestimmten, vorzugsweise einstellbaren, Winkelstellung zu halten.

Weist die Rückenlehnenaufschlagssicherungseinheit wenigstens eine Ventileinheit auf, können besonders vorteilhaft gewichtssparend Stellvorgänge realisiert werden. Grundsätzlich sind jedoch auch andere, dem Fachmann als sinnvoll erscheinende Stellelemente denkbar.

Umfasst die Sitzvorrichtung eine Rückenlehnenverstelleinheit, die zumindest teilweise einstückig mit der Rückenlehnenaufschlagssicherungseinheit ausgebildet ist, können wiederum Bauteile, Bauraum und Gewicht eingespart werden. Dabei soll unter einer "Rückenlehnenverstelleinheit" insbesondere eine Einheit verstanden werden, die dazu vorgesehen ist, eine Rückenlehne von einem Bediener in verschiedenen Winkelstellungen einstellbar auszuführen.

In einer weiteren Ausgestaltung der Erfindung wird vorgeschlagen, dass die Stelleinheit eine Halteeinheit aufweist, die dazu vorgesehen ist, wenigstens ein Stellelement der Stelleinheit nach einem Crashfall in einer Stellung zu halten. Durch eine entsprechende Ausgestaltung kann ein ungewünschtes Sperren vermieden werden. Das Stellelement kann dabei von verschiedenen, dem Fachmann als sinnvoll erscheinenden Elementen gebildet sein, wie beispielsweise von einem Ventilelement, einem Massenelement usw.

Ferner wird vorgeschlagen, dass die Stelleinheit eine Einstelleinheit umfasst, die dazu vorgesehen ist, zumindest eine Kenngröße einzustellen. Dabei ist denkbar, dass mittels der Einstelleinheit verschiedene, dem Fachmann als sinnvoll erscheinende Kenngrößen einstellbar ausgebildet werden. Besonders vorteilhaft sind jedoch eine Dämpfungskenngröße und/oder eine Kenngröße für einen Beschleunigungsschwellwert einstellbar, ab dem die Stelleinheit den Sicherungsvorgang auslöst. Die Einstelleinheit kann hierbei verschiedene Stellelemente aufweisen, wie beispielsweise ein Stellelement zur Einstellung einer Federkraft, einer Reibkraft, einer Druckkraft zum Öffnen eines Ventils, und/oder es könnte auch eine Masse eines Massenelements einstellbar ausgeführt werden, indem diesem beispielsweise Massenelemente hinzugefügt oder auch von diesem Massenelement entfernt werden können usw.

### Zeichnung

Weitere Vorteile ergeben sich aus der folgenden Zeichnungsbeschreibung. In der Zeichnung sind Ausführungsbeispiele der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Flugzeugsitzes mit einer erfindungsgemäßen Flugzeugsitzvorrichtung sowie einen angedeuteten Passagier vor einem Crashfall,
- Fig. 2: den Flugzeugsitz und den Passagier aus Figur 1 nach dem Crashfall in einer ersten Stellung,
- Fig. 3: den Flugzeugsitz und den Passagier aus Figur 1 nach dem Crashfall in einer zweiten Stellung und
- Fig. 4: eine schematische Darstellung eines Flugzeugsitzes mit einer alternativen erfindungsgemäßen Flugzeugsitzvorrichtung sowie einen angedeuteten Passagier.

### Beschreibung der Ausführungsbeispiele

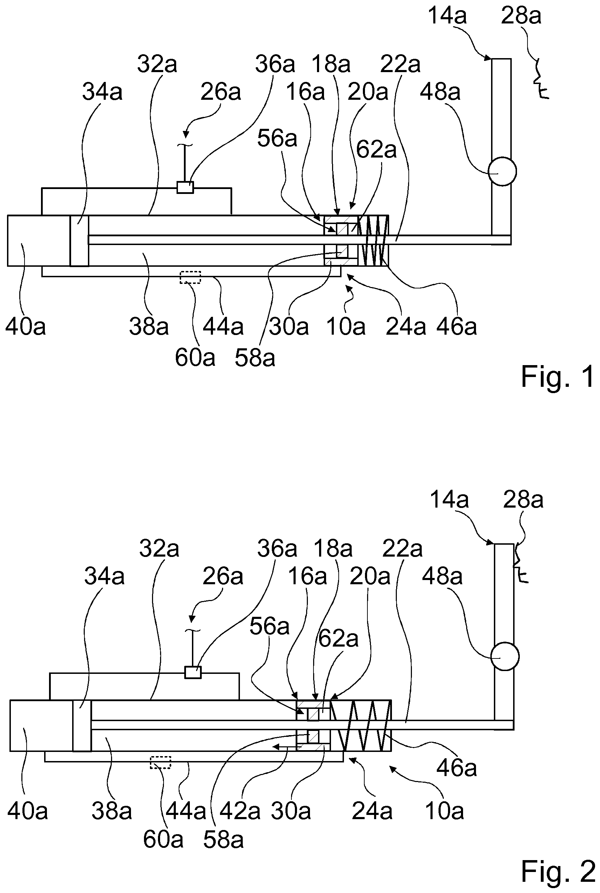

Figur 1 zeigt eine schematische Darstellung eines Flugzeugsitzes mit einer erfindungsgemäßen Flugzeugsitzvorrichtung sowie einen angedeuteten Passagier 28a vor einem Crashfall in einem Flugzeug. Die Flugzeugsitzvorrichtung weist eine Rückenlehnenaufschlagssicherungseinheit 10a auf, die dazu vorgesehen ist, Aufschlagkräfte 12a auf eine Rückseite einer Rückenlehne 14a des Flugzeugsitzes in einem Crashfall zu reduzieren. Die Rückenlehnenaufschlagssicherungseinheit 10a weist eine Stelleinheit 16a auf, die dazu vorgesehen ist, einen Sicherungsvorgang einzuleiten. Die Stelleinheit 16a weist eine rückenlehnenkraftunabhängige Crashsensoreinheit 18 auf, die einen Beschleunigungssensor umfasst. Ferner weist die Stelleinheit 16a eine Aktoreinheit 20a auf, die dazu vorgesehen ist, einen Stellvorgang einzuleiten. Die Aktoreinheit 20a und die Crashsensoreinheit 18a sind teilweise einstückig ausgebildet, und zwar weisen die Aktoreinheit 20a und die Crashsensoreinheit 18a ein gemeinsames, einstückiges Massenelement 30a auf.

Der Flugzeugsitz weist eine Rückenlehnenverstelleinheit 26a auf, die als so genannter Hydrolock ausgebildet ist und eine Rückenlehnenverriegelung der Rückenlehne 14a in verschiedenen Winkelstellungen ermöglicht. Der Hydrolock umfasst einen Verstellzylinder 32a und einen in dem Verstellzylinder 32a verschiebbar gelagerten Kolben 34a. Der Kolben 34a ist über eine Kolbenstange 22a mit einer Unterseite der Rückenlehne 14a verbunden. Die Rückenlehnenverstelleinheit 26a weist eine Ventileinheit 36a auf, die von dem Passagier 28a mittels eines nicht näher dargestellten Betätigungselements ansteuerbar ist, so dass bei einem Verstellvorgang die Ventileinheit 36a geöffnet und Flüssigkeit über die Ventileinheit 36a von einer Kammer 38a vor dem Kolben 34a in eine Kammer 40a hinter dem Kolben 34a oder umgekehrt strömen kann. Anstatt einer Flüssigkeit sind auch andere strömungsfähige Medien denkbar, wie insbesondere Luft.
Die Rückenlehnenaufschlagssicherungseinheit 10a ist teilweise einstückig mit der Rückenlehnenverstelleinheit 26a ausgebildet, und zwar indem das Massenelement 30a in dem Verstellzylinder 32a gelagert ist. Die Rückenlehnenaufschlagssicherungseinheit 10a und die Rückenlehnenverstelleinheit 26a weisen damit den gemeinsamen Verstellzylinder 32a auf.

Das Massenelement 30a ist Teil einer Ventileinheit 24a der Rückenlehnenaufschlagssicherungseinheit 10a sowie Teil einer Auslöseeinheit der Rückenlehnenaufschlagssicherungseinheit 10a, die dazu vorgesehen ist, eine Rückenlehnenverriegelung der Rückenlehnenverstelleinheit 26a aufzuheben. Das Massenelement 30a dichtet in seiner Ausgangsstellung vor einem Crashfall einen Bypasskanal 44a der Rückenlehnenaufschlagssicherungseinheit 10a ab, der die Kammern 38a, 40a innerhalb des Verstellzylinders 32a verbindet. Das Massenelement 30a ist in seiner Ausgangsstellung mittels eines Federelements 46a gesichert. In einer Ausgangsstellung des Massenelements 30a ist das Federelement 46a spannungsfrei und kann zur Sicherung der Ausgangsstellung des Massenelements 30a außerhalb eines Crashfalls Zug- und Druckkräfte aufnehmen. Das Federelement 46a ist dazu vorgesehen, den Bypasskanal 44a erst ab einem bestimmten Beschleunigungsschwellwert freizugegeben.

Die Stelleinheit 16a umfasst zudem eine Einstelleinheit 56a, die dazu vorgesehen ist, Kenngrößen einzustellen, und zwar eine Dämpfungskenngröße und eine Kenngröße für den Beschleunigungsschwellwert, ab dem die Stelleinheit 16a den Sicherungsvorgang auslöst. Die Einstelleinheit 56a weist eine, in einem Durchgangskanal 62a des Massenelements 30a angeordnete Drosseleinheit 58a auf, die erst ab einem bestimmten, einstellbaren Druck öffnet, so dass durch den Durchgangskanal 62a des Massenelements 30a Flüssigkeit strömen und das Massenelement 30a verschoben werden kann. Alternativ und/oder zusätzlich könnte die Einstelleinheit 56a eine einstellbare Drosseleinheit 60a im Bypasskanal 44 aufweisen und/oder auch andere, dem Fachmann als sinnvoll erscheinende Einstellelemente umfassen, wie beispielsweise ein Einstellelement zur Einstellung einer Federkraft des Federelements 46a und einer Reibkraft des Massenelements 30a innerhalb des Verstellzylinders 32a usw. Ferner wäre auch denkbar, dass dem Massenelement 30a weitere Massenelemente hinzugefügt werden können und/oder dass dieses austauschbar ausgeführt ist, um eine Einstellbarkeit zu erreichen. Grundsätzlich ist jedoch auch denkbar, die Sitzvorrichtung ohne die Einstelleinheit 56a auszuführen, so dass die Flüssigkeit frei durch den Durchgangskanal 62a des Massenelements 30a strömen kann.

Tritt ein Crashfall auf und wird das Flugzeug verzögert, wirken auf das Massenelement 30a Beschleunigungskräfte 42a (Figur 2). Wird ein bestimmter Druck an der Drosseleinheit 58a überschritten, wird diese geöffnet und das Massenelement 30a wird, angetrieben durch die Beschleunigungskräfte 42a, entgegen einer Federkraft des Federelements 46a aus seiner Ausgangsstellung heraus bewegt, wodurch die teilweise von dem Massenelement 30a mit gebildete Ventileinheit 24a und damit der Bypasskanal 44 geöffnet und die Rückenlehnenverriegelung aufgehoben wird. Durch die auf das Massenelement 30a wirkenden Beschleunigungskräfte 42a wird das Federelement 46a überdehnt, so dass das Massenelement 30a auch nach Abfall der Beschleunigungskräfte 42a den Bypasskanal 44a offen hält. Das Federelement 46a bildet damit eine Halteeinheit, die dazu vorgesehen ist, nach dem Crashfall das Massenelement 30a in seiner der Rückenlehne 14a abgewandten Stellung und die Ventileinheit 24a offen zu halten.

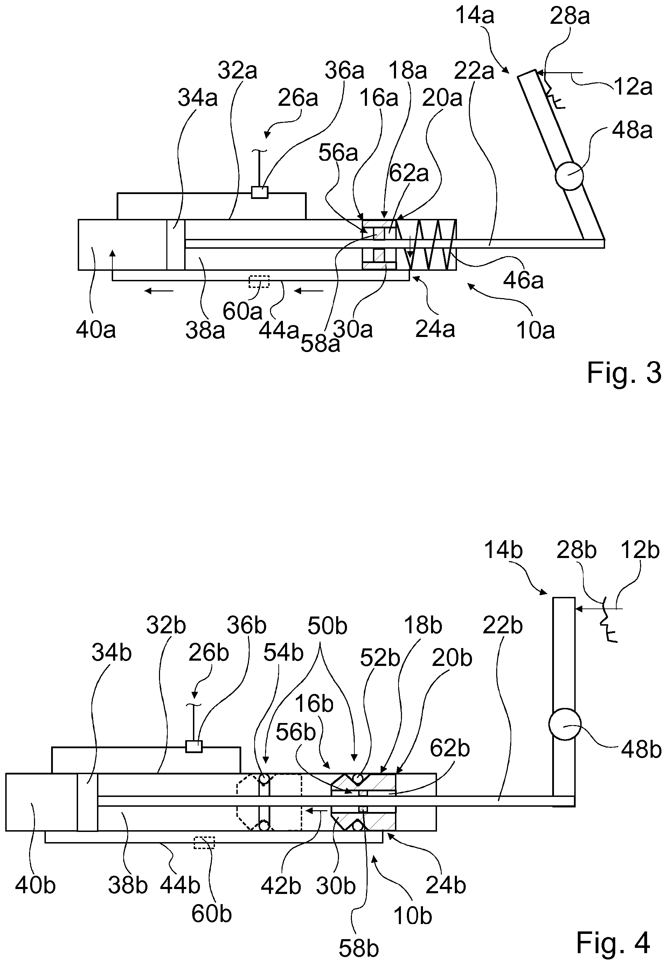

Trifft der Passagier 28a nun auf die Rückseite der vor ihm befindlichen Rückenlehne 14a, kann Flüssigkeit von der Kammer 38a über den Bypasskanal 44a in die Kammer 40a strömen, der Kolben 34a kann innerhalb des Verstellzylinders 32a in Richtung der Rückenlehne 14a verschoben werden, und die Rückenlehne 14a kann um einen Schwenkpunkt 48a mit ihrem oberen Ende nach vorne, d.h. in eine vom Passagier 28a abgewandte Richtung geschwenkt werden, wodurch die Aufschlagskraft 12a des Passagiers 28a bzw. des Kopfs des Passagiers 28a auf der Rückseite der Rückenlehne 14a gedämpft werden kann (Figur 3).

Nach dem Crashfall kann die Rückenlehne 14a wieder in ihre Ausgangsstellung zurückbewegt werden, wobei Flüssigkeit von der Kammer 40a über den Bypasskanal 44a in die Kammer 38a strömt.

In der Figur 4 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 3 verwiesen werden kann. Zur Unterscheidung der Ausführungsbeispiele ist der Buchstabe a in den Bezugszeichen des Ausführungsbeispiels in den Figuren 1 bis 3 durch den Buchstaben b in den Bezugszeichen des Ausführungsbeispiels der Figur 4 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 3 verwiesen werden.

Die Figur 4 zeigt eine Flugzeugsitzvorrichtung mit einer Rückenlehnenaufschlagssicherungseinheit 10b, die eine Stelleinheit 16b umfasst. Die Stelleinheit 16b weist eine rückenlehnenkraftunabhängige Crashsensoreinheit 18b mit einem Beschleunigungssensor auf, der ein Massenelement 30b umfasst. Die Crashsensoreinheit 18b weist ferner eine Fangeinheit 50b auf, die dazu vorgesehen ist, das Massenelement 30b vor einem Crashfall in seiner Ausgangsstellung zu halten und das Massenelement 30b nach dem Crashfall und nach einer Bewegungsphase des Massenelements 30b in einer Endstellung zu fangen und zu halten, wie dies in Figur 4 angedeutet ist. Die Fangeinheit 50b weist zwei beabstandete, elastische Elemente 52b, 54b auf, die in einem Verstellzylinder 32b einer Rückenlehnenverstelleinheit 26b der Flugzeugsitzvorrichtung fest angeordnet sind. Im Crashfall wird zuerst das Element 52b in radialer Richtung komprimiert. Das Massenelement 30b wird freigegeben und kann in eine von einer Rückenlehne 14b abgewandte Richtung innerhalb des Verstellzylinders 32b verschoben werden. Anschließend wird das Element 54b von dem Massenelement 30b in radialer Richtung verformt, so dass das Massenelement 30b in seiner Endstellung gefangen werden kann. Hierfür sind an das Massenelement 30b entsprechende Schrägflächen angeformt. Grundsätzlich sind auch andere, dem Fachmann als sinnvoll erscheinende Fangvorrichtungen denkbar. Die Fangeinheit 50b bildet damit eine Halteeinheit, die dazu vorgesehen ist, nach dem Crashfall das Massenelement 30b in seiner der Rückenlehne 14b abgewandten Stellung und die Ventileinheit 24b offen zu halten.

### Bezugszeichen

- 10: Rückenlehnenaufschlagssicherungseinheit
- 12: Aufschlagkraft
- 14: Rückenlehne
- 16: Stelleinheit
- 18: Crashsensoreinheit
- 20: Aktoreinheit
- 22: Kolbenstange
- 24: Ventileinheit
- 26: Rückenlehnenverstelleinheit
- 28: Passagier
- 30: Massenelement
- 32: Verstellzylinder
- 34: Kolben
- 36: Ventileinheit
- 38: Kammer
- 40: Kammer
- 42: Beschleunigungskraft
- 44: Bypasskanal
- 46: Federelement
- 48: Schwenkpunkt
- 50: Fangeinheit
- 52: Element
- 54: Element
- 56: Einstelleinheit
- 58: Drosseleinheit
- 60: Drosseleinheit
- 62: Durchgangskanal

## Patentansprüche

1. Sitzvorrichtung, insbesondere Flugzeugsitzvorrichtung, mit einer Rückenlehnenaufschlagssicherungseinheit (10a; 10b), die dazu vorgesehen ist, Aufschlagkräfte (12a; 12b) auf eine Rückenlehne (14a; 14b) in einem Crashfall zumindest teilweise zu reduzieren, wobei die Rückenlehnenaufschlagssicherungseinheit (10a; 10b) eine Stelleinheit (16a; 16b) aufweist, die zumindest dazu vorgesehen ist, einen Sicherungsvorgang einzuleiten, wobei die Stelleinheit (16a; 16b) zumindest eine zumindest weitgehend rückenlehnenkraftunabhängige Crashsensoreinheit (18a; 18b) und eine Aktoreinheit (20a; 20b), die dazu vorgesehen ist, einen Stellvorgang einzuleiten, aufweist **dadurch gekennzeichnet, dass** die Aktoreinheit (20a; 20b) und die Crashsensoreinheit (18a; 18b) zumindest teilweise einstückig ausgebildet sind.

2. Sitzvorrichtung nach Anspruch 1,
**dadurch gekennzeichnet, dass** die Crashsensoreinheit (18a; 18b) zumindest einen Beschleunigungssensor aufweist.

3. Sitzvorrichtung nach einem der vorhergehenden Ansprüche,
**dadurch gekennzeichnet, dass** die Rückenlehnenaufschlagssicherungseinheit (10a; 10b) zumindest eine Auslöseeinheit aufweist, die dazu vorgesehen ist, eine Rückenlehnenverriegelung zumindest teilweise aufzuheben.

4. Sitzvorrichtung nach einem der vorhergehenden Ansprüche,
**dadurch gekennzeichnet, dass** die Rückenlehnenaufschlagssicherungseinheit (10a; 10b) wenigstens eine Ventileinheit (24a; 24b) aufweist.

5. Sitzvorrichtung nach einem der vorhergehenden Ansprüche,
**gekennzeichnet durch** eine Rückenlehnenverstelleinheit (26a; 26b), die zumindest teilweise einstückig mit der Rückenlehnenaufschlagssicherungseinheit (10a; 10b) ausgebildet ist.

6. Sitzvorrichtung nach einem der vorhergehenden Ansprüche,
**dadurch gekennzeichnet, dass** die Stelleinheit (16a; 16b) eine Halteeinheit aufweist, die dazu vorgesehen ist, wenigstens ein Stellelement der Stelleinheit (16a; 16b) nach einem Crashfall in einer Stellung zu halten.

7. Sitzvorrichtung nach einem der vorhergehenden Ansprüche,
**dadurch gekennzeichnet, dass** die Stelleinheit (16a; 16b) eine Einstelleinheit (56a; 56b) umfasst, die dazu vorgesehen ist, zumindest eine Kenngröße einzustellen.

8. Sitz, insbesondere Flugzeugsitz, mit einer Sitzvorrichtung nach einem der vorhergehenden Ansprüche.

9. Verfahren zur zumindest teilweise Reduzierung der Aufschlagkräfte auf eine Rückenlehne, insbesondere einer Flugzeugsitzvorrichtung, mit einer Vorrichtung nach einem der Ansprüche 1 bis 7.

## Claims

1. Seat device, in particular aircraft seat device, with a backrest impact safeguarding unit (10a; 10b) that is configured to at least partly reduce impact forces (12a; 12b) on a backrest (14a; 14b) in case of a crash, the backrest impact safeguarding unit (10a; 10b) comprising an adjusting unit (16a; 16b), which is at least configured to initiate a safeguarding process, the adjusting unit (16a; 16b) comprising at least one crash sensor unit (18a; 18b), which is at least independent from a backrest force/from backrest forces, and an actuator unit (20a; 20b), which is configured to initiate an adjusting process, **characterised in that** the actuator unit (20a; 20b) and the crash sensor unit (18a; 18b) are embodied at least partly integrally.

2. Seat device according to claim 1,
**characterised in that** the crash sensor unit (18a; 18b) comprises at least an acceleration sensor.

3. Seat device according to one of the preceding claims,
**characterised in that** the backrest impact safeguarding unit (10a; 10b) comprises at least one trigger unit, which is configured to at least partly release a backrest lock.

4. Seat device according to one of the preceding claims,
**characterised in that** the backrest impact safeguarding unit (10a; 10b) comprises at least one valve unit (24a; 24b).

5. Seat device according to one of the preceding claims,
**characterised by** a backrest adjustment unit (26a; 26b), which is embodied at least partly integrally with the backrest impact safeguarding unit (10a; 10b).

6. Seat device according to one of the preceding claims,
**characterised in that** the adjusting unit (16a; 16b) comprises a holding unit, which is configured to hold at least one adjusting element of the adjusting unit (16a; 16b) in a position after a crash.

7. Seat device according to one of the preceding claims,
**characterised in that** the adjusting unit (16a; 16b) comprises a setting unit (56a; 56b), which is configured to set at least one parameter.

8. Seat, in particular aircraft seat, with a seat device according to one of the preceding claims.

9. Method for an at least partial reduction of the impact forces onto a backrest, in particular a backrest of an aircraft seat, with a device according to one of claims 1 to 7.

## Revendications

1. Dispositif de siège, notamment dispositif de siège d'avion, avec une unité dossier sauvegarde-choc (10a ; 10b) prévue à au moins partiellement réduire les forces d'impact (12a ; 12b) sur un dossier (14a ; 14b) en cas de crash, l'unité dossier sauvegarde-choc (10a ; 10b) comprenant une unité d'ajustement (16a ; 16b), laquelle est au moins désignée pour démarrer un procès de sauvegarde, l'unité d'ajustement (16a ; 16b) comportant au moins une unité capteur de crash (18a ; 18b), laquelle est au moins en grande partie indépendante d'une force de dossier, et une unité actionneur (20a ; 20b), laquelle est prévue pour démarrer un procès d'ajustement,
**caractérisé en ce que**
l'unité actionneur (20a ; 20b) et l'unité capteur de détection de crash (18a ; 18b) sont implémentées au moins partiellement intégralement.

2. Dispositif de siège selon la revendication 1,
**caractérisé en ce que**
l'unité capteur de crash (18a ; 18b) comporte au moins un capteur d'accélération.

3. Dispositif de siège selon l'une quelconque des revendications précédentes, **caractérisé en ce que** l'unité dossier sauvegarde-choc (10a ; 10b) comporte au moins une unité de démarrage prévue pour au moins partiellement relâcher un verrouillage de dossier.

4. Dispositif de siège selon l'une quelconque des revendications précédentes, **caractérisé en ce que** l'unité dossier sauvegarde-choc (10a ; 10b) comporte au moins une unité de valve (24a ; 24b).

5. Dispositif de siège selon l'une quelconque des revendications précédentes, **caractérisé par** une unité d'ajustement de dossier (26a ; 26b), laquelle est implémentée au moins partiellement intégralement avec l'unité dossier sauvegarde-choc (10a ; 10b).

6. Dispositif de siège selon l'une quelconque des revendications précédentes, **caractérisé en ce que** l'unité d'ajustement (16a ; 16b) comporte une unité de rétention prévue pour retenir après un crash au moins un élément d'ajustement de l'unité d'ajustement (16a ; 16b) dans une position.

7. Dispositif de siège selon l'une quelconque des revendications précédentes, **caractérisé en ce que** l'unité d'ajustement (16a ; 16b) comporte une unité de réglage (56a ; 56b) prévue pour régler au moins un paramètre.

8. Siège, notamment siège d'avion, avec un dispositif de siège selon l'une quelconque des revendications précédentes.

9. Procédé pour une au moins partielle réduction des forces d'impact sur un dossier, en particulier sur un dossier d'un dispositif de siège d'avion, avec un dispositif se-Ion l'une quelconque des revendications 1 à 7.
